# EUROPÄISCHE PATENTANMELDUNG

(11) **EP 2 656 706 A1**
(43) Veröffentlichungstag der Anmeldung: **30.10.2013**
(21) Anmeldenummer: 12165245.7
(22) Anmeldetag: 24.04.2012
(51) Int. Cl.: A01B 1/16

(54) **Vorrichtung und Verfahren zum Entfernen von Pflanzen**

(71) Anmelder: Odermatt, Walter, 5502 Hunzenschwil (CH)
(72) Erfinder: Odermatt, Walter, 5502 Hunzenschwil (CH)
(74) Vertreter: Hepp Wenger Ryffel AG

(57) **Zusammenfassung**

Eine Vorrichtung (1) und ein Verfahren zum Entfernen von Pflanzen aus dem Erdboden umfassend mindestens zwei Halteelemente (2) zum Halten von Teilen des Pflanzens zwischen den Halteelementen (2) werden offenbart. Die Halteelemente (2) sind entlang einer Einführungsrichtung (3) der Vorrichtung in den Erdboden einführbar, wobei ein Abstand (A) zwischen Halteflächen der Halteelemente (2) einstellbar ausgebildet ist. Mindestens eine Haltefläche eines ersten Halteelements ist in einer Verschiebungsrichtung parallel zur Einführungsrichtung relativ zu einer Haltefläche eines zweiten Halteelements verstellbar ausgebildet.

## Beschreibung

Die Erfindung betrifft eine Vorrichtung und ein Verfahren zum Entfernen von Pflanzen gemäss den Merkmalen des Oberbegriffs der unabhängigen Patentansprüche.

Im konventionellen Landbau wurden Pflanzen, insb. Unkräuter bisher mit Hilfe von Pestiziden bekämpft. Im biologischen Landbau ist dies nicht erlaubt, sodass Unkräuter mechanisch bekämpft werden müssen. Bei der mechanischen Bekämpfung ist vor allen Dingen das Herausreissen der Pflanzen mit samt ihrer Wurzeln eine der effektivsten Methoden. Hierbei kommen im Allgemeinen einfache Handarbeitsgeräte oder verschiedene Maschinen zum Einsatz. Die rein manuelle Bekämpfung ist allerdings sehr anstrengend und kann ohne Ausdauer nicht lange von einer Person durchgeführt werden.

Aus der DE 37 173 35 ist bereits ein Unkrautbohrer bekannt, bei dem sich zwei Bohrergewindegänge um die Unkrautwurzel in das Erdreich einschrauben und der Unkrautbohrer darauf folgend mit samt dem Unkraut aus dem Erdreich gezogen wird. Dies ist sehr anstrengend und das Unkraut kann leicht zwischen den Bohrern heraus rutschen.

Aus der DE 20 2006 012 894 ist ein spiralförmiger Unkrautentferner bekannt, der manuell in den Boden eingedrängt werden muss. Des Weiteren kann auch hier das Unkraut aus der Spirale heraus rutschen.

Aus der DE 10 2007 006 231 ist ein Hohlbohrer zum Jäten von Unkraut bekannt. Ein derartiger Hohlbohrer schneidet die Wurzeln ab, die in den meisten Fällen wieder austreiben und somit das Unkraut nicht nachhaltig entfernen.

Aus der DE 201 09 630 ist ein Bohrerspaten- und Wurzelzieher bekannt, der zwei zu Spiralen gedrehte Spatenblätter umfasst. Die Spatenblätter drehen gegenläufig und sind parallel zu einander angeordnet. Die Vorrichtung wird manuell aus dem Erdboden heraus gehoben und ergreift nur Wurzeln, die in der Breite der Entfernung der spiralförmigen Spatenblätter entsprechen

Aus der WO 99/05898 ist ein Greifelement zum Entfernen von Wurzelstöcken bekannt. Das Greifwerkzeug greift aussen um das Unkraut herum und umschliesst die Wurzel sowie das Erdreich. Es entstehen somit sehr grosse Löcher im Erdboden, die nachfolgend nachgefüllt werden müssen.

Es ist daher Aufgabe der vorliegenden Erfindung, die Nachteile des Standes der Technik zu vermeiden und insbesondere eine Vorrichtung und ein Verfahren zu schaffen, die Pflanzen mit samt den Wurzeln aus dem Boden holen, ohne gleichzeitig grosse Mengen an Erde mitzuführen.

Die Aufgabe wird gelöst mit einer Vorrichtung und einem Verfahren gemäss dem kennzeichnenden Teil der unabhängigen Patentansprüche.

Die erfindungsgemässe Vorrichtung zum Entfernen von Pflanzen, insbesondere Unkraut, aus dem Erdboden weist mindestens zwei Halteelemente zum Halten von Teilen der Pflanze zwischen den Halteelementen auf. Die Halteelemente sind entlang einer Einführungsrichtung der Vorrichtung in den Erdboden einführbar. Zwischen Halteflächen der Halteelemente ist ein Abstand einstellbar ausgebildet, wobei mindestens eine Haltefläche eines ersten Halteelements in einer Verschiebungsrichtung parallel zur Einführungsrichtung relativ zu einer Haltefläche eines zweiten Halteelements verstellbar ausgebildet ist.

Eine derartige Vorrichtung ermöglicht das Greifen von Wurzeln von Pflanzen ohne dass diese zerschnitten werden. Gleichzeitig wird die mitgenommene Erde beim Herausziehen der Vorrichtung zu einem Minimum verringert.

Die Vorrichtung kann von einer Einführposition mit grösseren Abstand der Halteflächen in eine Klemmposition mit einem kleinen Abstand der Halteflächen bringbar sein.

Somit kann die Vorrichtung leicht in einer Einführungsposition eingeführt und das Pflanzen durch Verschiebung in die Klemmposition gegriffen werden und so aus dem Boden entfernt werden.

Der Abstand der Halteflächen kann durch Rotation oder durch axiale Verschiebung einstellbar ausgebildet sein.

Der Abstand kann in einem Bereich zwischen 1 bis 120 mm einstellbar ausgebildet sein.

Bevorzugt wird die Vorrichtung in einer Einführungsposition in den Erdboden eingeführt. Daraufhin wird durch Verschiebung in die Klemmposition die Pflanze gegriffen und die Vorrichtung mitsamt der Pflanze aus dem Boden herausgezogen. Die Vorrichtung wird dann wieder zurück in die Einführungsposition gebracht, damit die gegriffene Pflanze aus der Vorrichtung entfernt werden kann. Dies kann beispielsweise durch eine Umkehr einer Drehrichtung des Kerns oder eines der Halteelemente oder auch eine Rüttelbewegung geschehen.

Die Halteelemente können helixförmig angeordnete Halteflächen umfassen, wobei die Halteelemente insbesondere als zylindrische oder kegelförmige Spiralen ausgebildet sein können.

Helixförmig im Rahmen dieser Anmeldung umfasst zylindrische sowie kegelförmige Schraubenlinien.

Halteelemente mit helixförmig ausgebildeten Halteflächen ermöglichen ein leichtes Einführen der Vorrichtung in den Erdboden sowie eine verbesserte Abführung der mitgeführten Erde nach dem Herausziehen der Wurzel des Pflanzens.

Die helixförmigen Halteflächen der verschiedenen Elemente können alle gleichgängig und/oder gegengängig ausgebildet sein.

Gegengängig ausgebildete Halteflächen definieren exakte Haltepunkte in den Kreuzungspunkten für die Wurzeln und lassen einen Grossteil der Erde beim Herausziehen zurück.

Gleichgängig Halteflächen führen zu einer vergleichsweise grösseren Haltefläche und somit zu mehr Wurzeln, die eingeklemmt werden.

Es können drei oder vier Halteelemente ausgebildet sein.

Drei oder vier Halteelemente führen zu einem optimalen Verhältnis von gegriffenen Wurzeln und zurückgelassener Erde. Es entstehen somit kaum Löcher im Erdboden und die Pflanze wird zuverlässig entfernt.

Ein Spalt zwischen den Halteelementen in der Klemmposition kann mindestens einen Millimeter, bevorzugt weniger als fünf Millimeter breit sein.

Der Spalt im Rahmen dieser Anmeldung ist definiert als der kürzeste Abstand zwischen zwei Halteelementen unabhängig von einer Richtung.

Ein derartiger Spalt führt zu einer sicheren Fixierung der Wurzeln ohne diese zu zerschneiden, sodass die Pflanze zuverlässig und nachhaltig entfernt wird.

Wenigstens ein Halteelement kann drehbar um eine Mittelachse ausgebildet sein.

Ein drehbares Halteelement erleichtert das Einführen der Vorrichtung in den Erdboden.

Der bevorzugte Drehmomentbereich liegt zwischen 300 und 900 Nm. Die bevorzugte Drehgeschwindigkeit liegt zwischen 30 und 90 Umdrehungen pro Minute. Beide Werte werden je nach Bodenbeschaffenheit angepasst.

Somit wird eine zuverlässige und vollständige Entfernung der Pflanzen aus dem Boden garantiert.

Drehbare Halteelemente können gleichläufig drehbar ausgebildet sein.

Gleichläufig drehbare Halteelemente führen zu einem einfachen Antrieb.

Die Halteelemente können gegenläufig drehbar ausgebildet sein.

Gegenläufig drehbare Haltelemente führen zu einem kleineren Drehmoment, welches auf eine Haltevorrichtung der Vorrichtung übertragen wird. Somit sind die übertragenen Kräfte kleiner und die Handhabbarkeit besser.

Die Halteelemente können konzentrisch um eine Mittelachse angeordnet sein und insbesondere in einer Schnittebene senkrecht zu der Mittelachse unterschiedliche Durchmesser aufweisen.

Der Durchmesser eines Halteelements umfasst im Rahmen dieser Anmeldung den Durchmesser der Schraubenlinie des helixförmigen Halteelements.

Eine konzentrische Anordnung von Halteelementen führt zu einem kompakten Gerät, das in der Lage ist, auch kleinere Pflanzen aus dem Erdboden zu entfernen und möglichst viele Wurzeln zu greifen.

Die Verwendung von unterschiedlichen Durchmessern für die Halteelemente führt dazu, dass die Vorrichtung verschieden lange Wurzeln greifen kann und somit die Pflanze sicherer aufnehmen kann.

Die Vorrichtung kann einen Einführungskern aufweisen, insbesondere einen drehbaren Einführungskern.

Ein Einführungskern erleichtert das genaue Ansetzen der Vorrichtung und eine Zentrierung während des Betriebs. Der Einführungskern ist bevorzugt in der Mitte der Vorrichtung auf der Mittelachse angeordnet. Der Einführungskern nimmt Platz ein und verhindert eine Bewegung der Pflanze nach innen.

Der Kern kann eine Bohrspitze aufweisen. Des Weiteren kann der Einführungskern eine helixförmige Aussenkontur aufweisen. Diese Helixkontur kann auf die Oberfläche des Kerns aufgebracht oder die direkte Kontur des Kerns sein. Die helixförmige Aussenkontur kann weiterhin Halteflächen umfassen.

Eine derartige Helixkontur ermöglicht das Abführen von Erde, wenn die Pflanze aus dem Boden herausgezogen worden ist. Bevorzugt ist der Einführungskern in beide Richtungen drehbar ausgebildet und ein Einbohren und das Abführen von Erde zu ermöglichen.

Die Vorrichtung kann eine äussere Hülle aufweisen, welche die Halteelemente zumindest teilweise entlang ihrer Peripherie umfasst.

Eine derartige Hülle hält die aufgenommene Erde zusammen und führt zu einem kleineren Loch im Erdboden.

Die Hülle kann im Querschnitt rund oder vieleckig sein sowie Löcher und/oder Schlitze aufweisen. Die Hülle kann als vollständig umgebender Zylindermantel oder auch aus einzelnen Hüllelementen bestehend ausgebildet sein. Die Hüllelemente können des Weiteren in Einführungsrichtung spitz zu laufend ausgebildet sein um das Einführen der Vorrichtung in den Erdboden zu erleichtern. Die Hülle kann des Weiteren trichterförmig um die Halteelemente ausgebildet sein.

Dies führt zu einer kleineren Lochgrösse und einem leichteren Zurückrieseln der Erde nach dem Entfernen der Pflanze.

Die Vorrichtung kann eine mechanische und/oder hydraulische Schnittstelle umfassen, mit der die Vorrichtung an einen Antrieb angeschlossen werden kann.

Durch die Schnittstelle ist die Vorrichtung an ein Arbeitsgerät anschliessbar.

Die Vorrichtung kann des Weiteren ein Getriebe umfassen.

Die Verwendung eines Getriebes führt zu einer Einstellbarkeit von Drehzahl und Drehmoment.

Die Vorrichtung kann einen Antrieb umfassen, bevorzugt einen hydrodynamischen, pneumatischen oder elektrischen Antrieb. Ein eigener Antrieb der Vorrichtung führt zu einer Unabhängigkeit der Vorrichtung von vorhandenen Antrieben.

Die Vorrichtung kann an eine Schnittstelle eines Traktors anschliessbar ausgebildet sein.

Somit kann ein Landwirt seine vorhandenen Gerätschaften zum Antrieb der Vorrichtung verwenden.

Die Drehbewegungen und Hub- und Senkbewegungen der Vorrichtung können mittels einer Steuereinheit an einem Traktor steuerbar sein. Bevorzugt umfasst die Steuereinheit einen Joystick.

Die Halteelemente der Vorrichtung können aus Stahl gefertigt sein. Die Verwendung von Stahl als Werkstoff führt zu einem haltbaren und zuverlässigen Werkzeug.

Die Halteelemente können an ihrem vorderen Ende spitz ausgebildet sein.

Das vordere Ende im Rahmen der Anmeldung ist der Teil der Vorrichtung, der in Einführungsrichtung den Erdboden als erstes berührt.

Eine spitze Ausbildung im Rahmen der Anmeldung bedeutet, dass die Halteelemente sich nach vorne verjüngen, bevorzugt in mehr als einer Ebene nach vorne verjüngen, insbesondere konisch zulaufend ausgebildet sind. Bevorzugt sind die Halteelemente jedoch nicht scharfkantig ausgebildet, sodass die Halteelemente die Wurzeln nicht abschneiden.

Eine derartige Ausbildung der Halteelemente führt zu einem leichteren Einführen der Halteelemente in den Erdboden.

Die Halteelemente können von einander unabhängig drehbar ausgebildet sein. Dies ermöglicht die Anpassung der Drehkraft und Geschwindigkeit an die Gegebenheiten im Erdboden sowie eine exakte Einstellung des Spaltes zwischen den Halteelementen.

Bevorzugt können die Halteelemente so individuell drehbar ausgebildet sein, dass durch eine Drehung eines Halteelements relativ zu einem anderen Halteelement ein axialer Abstand einstellbar ist.

Somit lässt sich der Abstand A leicht mit einem einfachen Antrieb einstellen. Alternativ ist es aber auch denkbar, ein Halteelement bezogen auf das andere Halteelement axial zu verschieben.

Zur Lösung der oben angegebenen Aufgabe führt des Weiteren ein Verfahren zum Entfernen von Pflanzen, dass die folgenden Schritte umfasst:
- Einführung einer Vorrichtung zum Entfernen von Pflanzen entlang einer Einführungsvorrichtung in den Erdboden, bevorzugt durch eine Drehbewegung. Bevorzugt wird eine Vorrichtung wie vorgehend beschrieben verwendet.
- Erfassen einer Wurzel der Pflanze durch das Einstellen eines Abstandes zwischen mindestens zwei Halteflächen von Halteelementen der Vorrichtung, wobei die Wurzel an der Haltestelle nicht abgetrennt wird und der Abstand durch eine Relativbewegung der Halteflächen der Halteelemente parallel zur Einführungsrichtung angepasst wird.
- Herausziehen der Vorrichtung aus dem Erdboden, wobei die Vorrichtung die Pflanze hält und so aus dem Erdboden entfernt.

Ein derartiges Verfahren ermöglicht das Herausholen von Pflanzenwurzeln aus dem Boden ohne gleichzeitig erhebliche Mengen an Erde mit abzuführen.

Die Relativbewegung der Halteelemente kann durch eine Drehung der Halteelemente verursacht werden, wobei die Drehung insbesondere gleichläufig oder gegenläufig verlaufen kann.

Durch eine Drehbewegung wird der Kraftaufwand verringert und somit die Haltbarkeit der verwendeten Vorrichtung erhöht. Des Weiteren ermöglicht eine Drehbewegung die Verwendung eines einfachen Antriebs.

Beim Einführen der Vorrichtung in die Erde kann die Erde durch eine Hülle zusammengehalten werden, bevorzugt eine Hülle wie vorhergehend beschrieben.

Somit werden die entstehenden Löcher kleiner und eine Nachbearbeitung des Bodens ist nicht mehr notwendig.

Die Pflanze beziehungsweise die Erde können nach dem Herausziehen der Vorrichtung aus dem Boden durch Betätigung der Halteelemente ausgestossen werden.

Dies kann beispielsweise durch eine Umkehr der Drehrichtung eines Halteelements oder der Einführungskerns durchgeführt werden. Auch durch eine Rüttelbewegung der gesamten Vorrichtung oder einer Rüttelbewegung der einzelnen Halteelemente beispielsweise durch eine wiederkehrende Umkehr der Drehrichtungen ist denkbar.

Dies führt zu einer leichten Reinigungsmöglichkeit der Vorrichtung und somit zu geringeren Kosten für das Entfernen der Pflanze.

Die Erfindung wird nachfolgend in Ausführungsbeispielen anhand von Figuren näher erläutert. Hierbei zeigt

| | |
|---|---|
| Figur 1 | eine schematische, perspektivische Ansicht der Vorrichtung mit gleichläufigen Halteelementen; |
| Figur 2 | eine Längsschnitt durch die Vorrichtung entlang der Mittelachse mit gleichläufigen Halteelementen; |
| Figur 3 | eine schematische, perspektivische Ansicht der Vorrichtung mit gegenläufigen Halteelementen; |
| Figur 4 | eine Längsschnitt durch die Vorrichtung entlang der Mittelachse mit gegenläufigen Halteelementen; |
| Figur 5 | eine Ansicht der Vorrichtung mit Antrieb; |
| Figur 6 | Längsschnitte der Vorrichtung in verschiedenen Positionen der Halteelemente. |

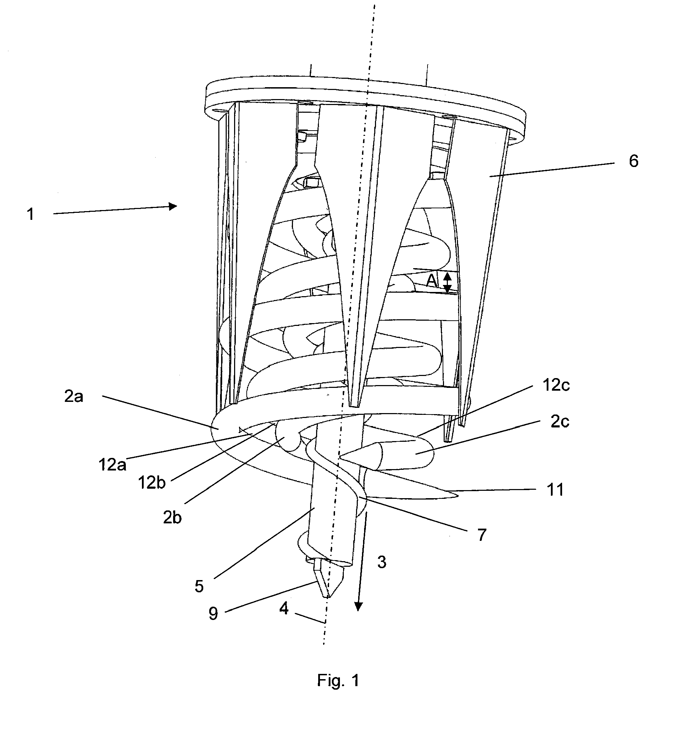

Figur 1 zeigt eine Ansicht der Vorrichtung 1 zum Entfernen von Pflanzen aus dem Erdboden. Die Vorrichtung 1 umfasst drei Halteelemente 2a, 2b, 2c. Die Halteelemente 2a, 2b, 2c sind helixförmig, gleichläufig ausgebildet und weisen jeweils unterschiedliche Durchmesser des Helix auf. Die Halteflächen 12a, 12b, 12c sind auf den Halteelementen ausgebildet. Das äusserste Halteelement 2a hat den grössten Durchmesser. Die Halteelemente 2a, 2b, 2c sind an ihrem vorderen Ende 11 spitz zu laufend ausgebildet. Dies ermöglicht ein erleichtertes Eindringen in den Boden. Zwischen dem äusseren Halteelement 2a und dem mittleren Halteelement 2c ist ein Abstand A in axialer Richtung ausgebildet. Im Betrieb kann dieser Abstand A eingestellt werden, indem das Halteelement 2a relativ zum Halteelement 2c gedreht wird. In einer Klemmposition entspricht der Abstand A 1 mm bis 5 mm. Die Halteelemente 2a, 2b, 2c sind konzentrisch um eine Mittelachse 4 angeordnet. Des Weiteren ist konzentrisch um die Mittelachse ein Einführungskern 5 ausgebildet. Auf der Oberfläche des Einführungskerns 5 ist eine Helixstruktur 7 aufgebracht. Entlang seiner Peripherie ist das äussere Halteelement 2a durch eine Hülle 6 umgeben. Die Hülle 6 besteht aus Hüllelementen, die in Einführungsrichtung 3 spitz zulaufen. Der Abstand A umfasst ausschliesslich eine Richtungskomponente in Einführungsrichtung der Vorrichtung. Der Spalt zwischen den Halteelementen 2a und 2c, umfasst des Weiteren die Komponente des Durchmesserunterschieds der Durchmesser der Helixstrukturen der Halteelemente 2a, 2b, 2c. Das Halteelement 2a hat einen Durchmesser von 100 mm, das Halteelement 2c hat einen Durchmesser von 165mm und das Halteelement 2b hat einen Durchmesser von 220mm. Die Stärke des einzelnen Halteelements 2a, 2b, 2c beträgt 20-25 mm. Die Länge der Halteelemente entlang der Mittelachse 4 beträgt 300mm.

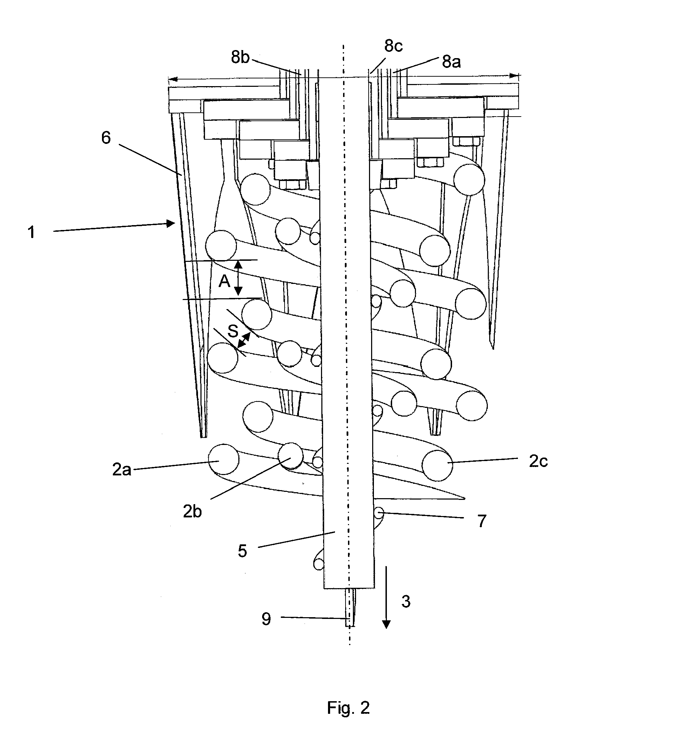

Figur 2 zeigt einen Längsschnitt durch die Vorrichtung 1. Analog zur Figur 1 sind die Halteelemente 2a, 2b, 2c, konzentrisch um die Mittelachse 4 und um Einführungskern 5 angeordnet. Der Einführungskern ist von einer Helixkontur 7 umgeben. Zwischen dem Halteelement 2a und dem Halteelement 2c ist ein axialer Abstand A ausgebildet, der einstellbar ist. In der dargestellten Einführungsposition entspricht der axiale Abstand A 50 mm Der Abstand A ist ausschliesslich der Abstand, der parallel zur Einführungsrichtung 3 ausgebildet ist. Zusammen mit der Durchmesserdifferenz der Halteelemente 2a und 2c führt dieser Abstand zum Spalt S. Die Halteelemente 2a, 2b, 2c, sind jeweils auf einer Hohlwelle 8a, 8b, 8c, befestigt. Das äussere Halteelement 2a ist an seiner Peripherie von einer Hülle 6 umgeben. Die Hülle 6 besteht aus Hüllelementen, analog zur Figur 1. Der Einführungskern 5 weist eine Bohrspitze 9 auf. Diese dient zur Zentrierung und zum erleichterten Einführen der Vorrichtung in den Erdboden. Die Einzelteile der Vorrichtung sind aus Stahl gefertigt, wobei Verschleissteile der Vorrichtung 1 mit Hartauftrag aufgeschweisst sind. Die Drehzahl der Halteelemente 2a, 2b, 2c beträgt im Wesentlichen 60 U/min, wobei die Drehzahl der Halteelemente 2a, 2b, 2c sowie die Ausreissgeschwindigkeit nicht zu hoch sein darf, da sonst kleine Wurzeln abreissen.

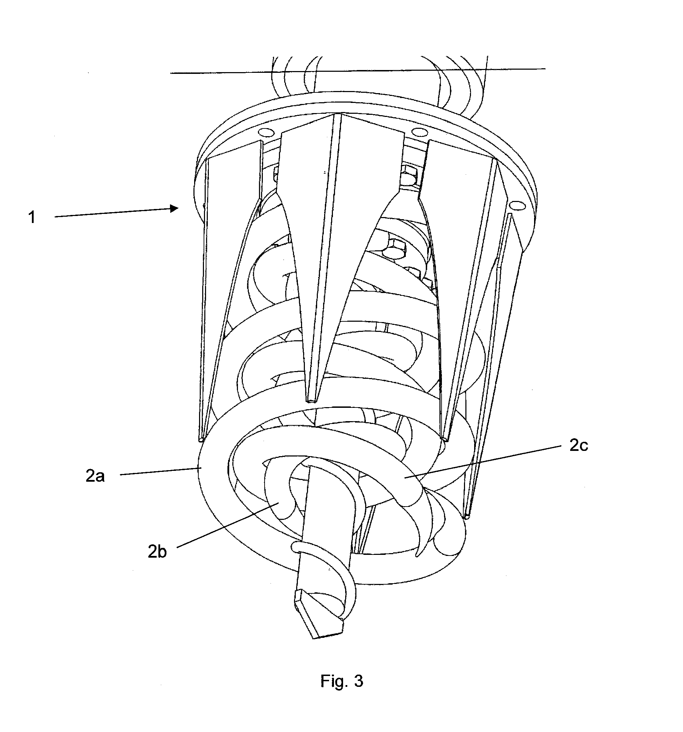

Figur 3 zeigt eine Vorrichtung 1 wie in Figur 1 beschrieben mit gegenläufig angeordneten Halteelementen 2a und 2c. Das Halteelement 2b ist gleichläufig zum Halteelement 2a angeordnet.

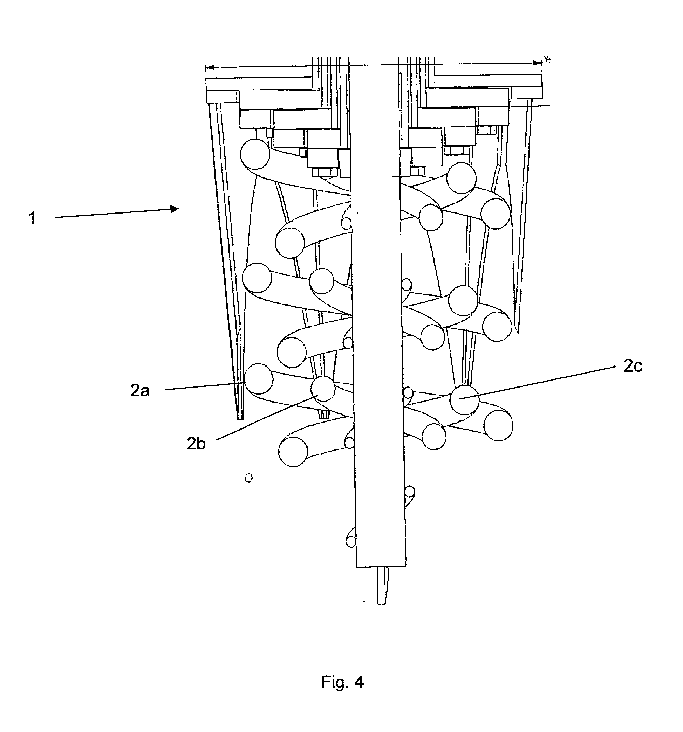

Figur 4 zeigt eine Vorrichtung 1 wie in Figur 2 beschrieben mit gegenläufig angeordneten Halteelementen 2a und 2c. Das Halteelement 2b ist gleichläufig zum Halteelement 2a angeordnet.

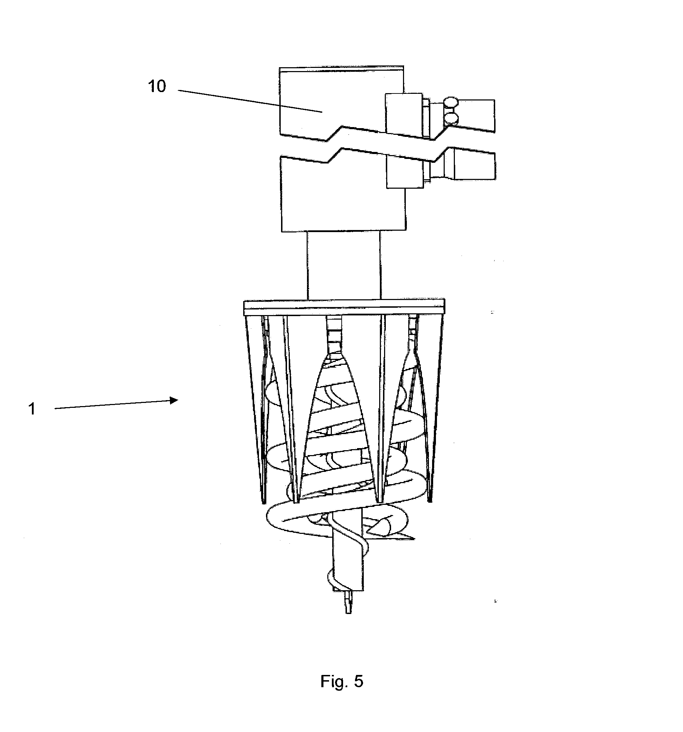

Figur 5 zeigt eine Ansicht der Vorrichtung 1. Eine Vorrichtung wie in den Figuren 1 und 2 beschrieben, ist mit einem hydraulischen Antrieb verbunden. Mit Hilfe des Antriebs können Drehmomente, Drehgeschwindigkeiten und der Abstand A (siehe Figur 2) eingestellt werden. Der Abstand A wird ausschliesslich durch Unterschiede in der Drehung verändert.

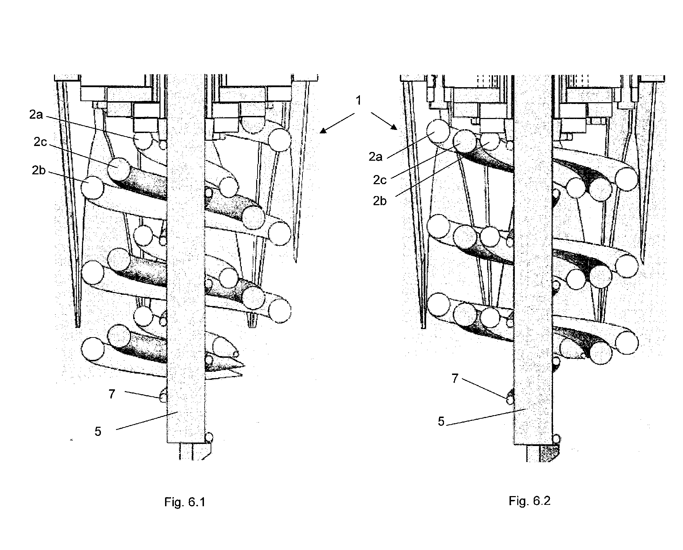

Figur 6 zeigt die Vorrichtung 1 in unterschiedlichen Betriebspositionen. In der ersten Abbildung der Figur 6 (6.1) ist die Vorrichtung 1 (siehe Figuren 1 und 2) in einer Einführungsposition dargestellt. Durch Vergrösserung des Abstands A (siehe Figur 1 oder 2) wurde der Spalt S (siehe Figur 2) auf 50mm eingestellt. Dies ermöglicht ein erleichtertes Einführen der Vorrichtung, ohne Erde zwischen den Halteelementen zu verfestigen. In dieser Position wird die Vorrichtung in den Erdboden eingeführt. In der zweiten Abbildung der Figur 6 (6.2) ist die Vorrichtung 1 (siehe Figur 1 und 2) in einer Klemmposition dargestellt. Durch Veränderung des Abstands A (siehe Fig. 1) wurde der Spalt S (siehe Fig. 2) auf 1mm bis 5mm eingestellt. In dieser Position werden Wurzeln zwischen den Halteelementen 2a, 2b, 2c festgehalten und gegriffen. Nach dem Greifen wird die Vorrichtung zusammen mit den Wurzeln wieder hochgezogen und somit die Pflanze aus dem Boden entfernt. Um die Pflanze wieder aus der Vorrichtung zu entfernen, wird die Vorrichtung wieder in die Einführungsposition (Fig. 6.1) mit grossem Abstand A (siehe Fig. 1) gebracht. Die Pflanze kann so aus der Vorrichtung 1 entfernt werden. Zum Auswerfen der Pflanze wird ausserdem der Einführungskern 5 so gedreht, dass die Helixkontur 7 die Pflanze aus der Vorrichtung 1 befördert.

## Patentansprüche

1. Vorrichtung (1) zum Entfernen von Pflanzen aus dem Erdboden, umfassend mindestens zwei Halteelemente (2) zum Halten von Teilen der Pflanze zwischen den Halteelementen (2), wobei die Halteelemente (2) entlang einer Einführungsrichtung (3) der Vorrichtung (1) in den Erdboden einführbar sind, **dadurch gekennzeichnet, dass** ein Abstand (A) zwischen Halteflächen der Halteelemente (2) einstellbar ausgebildet ist, wobei mindestens eine Haltefläche eines ersten Halteelements (2a) in einer Verschiebungsrichtung parallel zur Einführungsrichtung (3) relativ zu einer Haltefläche eines zweiten Halteelements (2c) verstellbar ausgebildet ist.

2. Vorrichtung (1) nach Anspruch 1, **dadurch gekennzeichnet, dass** die Vorrichtung (1) von einer Einführposition mit grösserem Abstand (A) in eine Klemmposition mit kleinem Abstand (A) bringbar ist.

3. Vorrichtung (1) nach einem der vorhergehenden Ansprüche, **dadurch gekennzeichnet, dass** die Halteelemente (2) helixförmig ausgebildete Halteflächen umfassen und insbesondere die Halteelemente (2) als zylindrische oder kegelförmige Spiralen ausgebildet sind.

4. Vorrichtung (1) nach Anspruch 3, **dadurch gekennzeichnet, dass** die helixförmigen Halteflächen (12) der verschiedenen Halteelemente (2) gleichgängig ausgebildet sind.

5. Vorrichtung (1) nach einem der vorhergehenden Ansprüche, **dadurch gekennzeichnet, dass** drei Halteelemente (2) ausgebildet sind.

6. Vorrichtung (1) nach einem der vorhergehenden Ansprüche, **dadurch gekennzeichnet, dass** ein Spalt (S) zwischen den Halteelementen (2) in der Klemmposition mindestens 1 mm, bevorzugt weniger als 5mm breit ist.

7. Vorrichtung (1) nach einem der vorhergehenden Ansprüche, **dadurch gekennzeichnet, dass** wenigstens ein Haltelement (2) drehbar um die Mittelachse (4) ausgebildet ist.

8. Vorrichtung (1) nach Anspruch 7, **dadurch gekennzeichnet, dass** alle Halteelemente (2) gleichläufig drehbar ausgebildet sind.

9. Vorrichtung (1) nach Anspruch 7, **dadurch gekennzeichnet, dass** mindestens ein Halteelement (2) gegenläufig zu den übrigen Halteelementen (2) drehbar ausgebildet ist.

10. Vorrichtung (1) nach einem der vorhergehenden Ansprüche, **dadurch gekennzeichnet, dass** die Halteelemente (2) konzentrisch um eine Mittelachse (4) angeordnet sind und insbesondere unterschiedliche Durchmesser aufweisen.

11. Vorrichtung (1) nach einem der vorhergehenden Ansprüche, **dadurch gekennzeichnet, dass** die Vorrichtung (1) einen Einführungskern (5) aufweist, insbesondere einen drehbaren Kern.

12. Vorrichtung (1) nach einem der vorhergehenden Ansprüche, **dadurch gekennzeichnet, dass** die Vorrichtung (1) eine äussere Hülle (6) aufweist, welche die Halteelemente (2) zumindest teilweise entlang ihrer Peripherie umfasst.

13. Vorrichtung (1) nach Anspruch 9, **dadurch gekennzeichnet, dass** die Hülle (6) trichterförmig um die Halteelemente (2) ausgebildet ist.

14. Vorrichtung (1) nach einem der vorhergehenden Ansprüche, **dadurch gekennzeichnet, dass** die Halteelemente (2) individuell drehbar ausgebildet sind, sodass durch eine Drehung eines Halteelements (2) relativ zu einem anderen Halteelement (2) ein axialer Abstand (A) einstellbar ist.

15. Verfahren zum Entfernen von Pflanzen umfassend die folgenden Schritte:
● Einführen einer Vorrichtung (1) zum Entfernen von Pflanzen entlang einer Einführungsrichtung (3), insbesondere einer Vorrichtung (1) gemäss der Ansprüche 1-10, in den Erdboden, bevorzugt durch eine Drehbewegung,
● Erfassen einer Wurzel der Pflanze durch das Einstellen eines Abstands (A) zwischen mindestens zwei Halteflächen von Halteelementen (2) der Vorrichtung (1), wobei die Wurzel an der Haltestelle nicht abgetrennt wird und der Abstand (A) durch eine Relativbewegung der Halteflächen der Halteelemente (2) parallel zur Einführungsrichtung (3) angepasst wird,
● Herausziehen der Vorrichtung (1) aus dem Erdboden, wobei die Vorrichtung (1) die Pflanze hält und so aus dem Erdboden entfernt.

16. Verfahren nach Anspruch 15, **dadurch gekennzeichnet, dass** die Relativbewegung der Halteelemente (2) durch eine Drehung der Halteelemente (2) verursacht wird, wobei die Drehung insbesondere gleichläufig oder gegenläufig verläuft.

17. Verfahren nach einem Ansprüche 15-16, **dadurch gekennzeichnet, dass** beim Einführen der Vorrichtung (1) die Erde durch eine Hülle (6) zusammengehalten wird.

18. Verfahren nach einem Ansprüche 15-17, **dadurch gekennzeichnet, dass** das Pflanzen/Erde nach dem Herausziehen der Vorrichtung (1) aus dem Boden durch Betätigung der Halteelemente (2) ausgestossen wird.
